(19) Europäisches Patentamt
European Patent Office
Office européen des brevets

(11) **EP 1 900 988 A1**

(12) **EUROPÄISCHE PATENTANMELDUNG**

(43) Veröffentlichungstag:
**19.03.2008 Patentblatt 2008/12**

(51) Int Cl.:
*F16L 9/00* *(2006.01)*  *F16L 9/12* *(2006.01)*
*B29C 59/04* *(2006.01)*

(21) Anmeldenummer: **06019131.9**

(22) Anmeldetag: **13.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Dipl.-Ing. Dr. Ernst Vogelsang GmbH & Co. KG**
**D-45699 Herten (DE)**

(72) Erfinder: **Vogelsang, Horst**
**45699 Herten (DE)**

(74) Vertreter: **Nunnenkamp, Jörg et al**
**Patentanwälte,**
**Andrejewski, Honke & Sozien,**
**Theaterplatz 3,**
**Postfach 10 02 54**
**45127 Essen (DE)**

(54) **Kunststoffrohr zur Führung eines Fluids**

(57) Gegenstand der vorliegenden Erfindung ist ein Kunststoffrohr (3) zur Führung eines Fluids, insbesondere ein Wärmeleit-Kunststoffrohr. Dieses Kunststoffrohr (3) verfügt über eine profilierte Rohraußenfläche (3a) und eine Rohrinnenfläche (3b). Im Rahmen der Erfindung weist die Rohraußenfläche (3a) zu ihrer Profilierung Oberflächeneinprägungen (10) auf.

Fig.4

EP 1 900 988 A1

**Beschreibung**

Die Erfindung betrifft ein Kunststoffrohr zur Führung eines Fluids, insbesondere ein Wärmeleit-Kunststoffrohr, mit einer profilierten Rohraußenfläche und einer Rohrinnenfläche. - Die Rohrinnenfläche kann ebenfalls profiliert sein. Dies stellt jedoch keine zwingende Eigenschaft dar.

Kunststoffrohre, die über eine profilierte Rohraußenfläche verfügen, sind allgemein bekannt, wozu auf die DE 1 808 271 verwiesen wird. Die bekannten Kunststoffrohre verfügen an ihrer Rohraußenfläche über Rippen, die ihre Festigkeit steigern sollen. Die Herstellung ist jedoch aufwendig.

Tatsächlich werden Kunststoffrohre überwiegend im Kanalbau, als Wasserrohre oder auch zur Führung von Wärmeleitflüssigkeit im Zusammenhang mit beispielsweise Fußbodenheizungen eingesetzt. Für diese Verwendungszwecke sind die fraglichen Kunststoffrohre prädestiniert, weil sie sich einfach biegen und preiswert herstellen lassen, sowie korrosionsbeständig sind. Aus diesem Grund setzt man Kunststoffrohre heutzutage auch in Verbindung mit Anlagen zur Nutzung der Erdwärme im Zuge der sogenannten geothermischen Energieerzeugung ein.

Dabei werden die fraglichen Kunststoffrohre in das Erdreich eingebracht und beispielsweise mäanderförmig in einer Tiefe von ca. 1 m parallel zur Erdoberfläche im Untergrund verlegt. Darüber hinaus kennt man sogenannte Erdsonden zur Gewinnung geothermischer Energie, die auf senkrecht in den Erdboden eingelassene Kunststoffrohre zurückgreifen, die bis in eine Tiefe von ca. 150 m reichen können. Insbesondere in letztgenanntem Fall müssen zur Verlegung der Kunststoffrohre Tiefenbohrungen vorgenommen werden. Das gleiche gilt für den Fall, dass beispielsweise Grundwasser zur Wasserversorgung herangezogen werden soll.

Bei solchen Tiefenbohrungen ergibt sich das Problem, dass nach Herstellen eines Bohrloches und Einbringen des Kunststoffrohres zumeist für eine oberflächenseitige Abdichtung des Bohrloches gesorgt werden muss. Andernfalls besteht die Gefahr von Beschädigungen des jeweiligen Kunststoffrohres. Außerdem kann die Wandung der Bohrung zusammenbrechen. Kurz und gut benötigt das Bohrloch in der Regel eine dauerhafte Stabilisierung, die in der Praxis mit Hilfe von speziellen, zunächst flüssigen und dann aushärtenden Baustoffmischungen vorgenommen wird, die in ähnlicher Form auch bei der Abdichtung von Mülldeponien zum Einsatz kommen.

Infolge der zunächst geringen Viskosität dieser flüssigen Baustoffmischungen vor dem Aushärten ist ihre Haftung an den in diesem Zusammenhang in der Praxis bisher eingesetzten Kunststoffrohren mit glatter Rohraußenfläche begrenzt. Vergleichbares gilt natürlich auch für Kunststoffrohre bei beispielsweise Fußbodenheizungen, bei denen ebenfalls eine verbesserte Haftung zwischen dem zunächst flüssigen und dann aushärtendem Estrich wünschenswert ist. Hier setzt die Erfindung ein.

Der Erfindung liegt das technische Problem zugrunde, ein derartiges Kunststoffrohr so weiter zu ertüchtigen, dass bei geringen Herstellungskosten insbesondere die Haftung von aushärtenden Baustoffen an der Rohraußenfläche verbessert ist.

Zur Lösung dieser technischen Problemstellung schlägt die Erfindung bei einem gattungsgemäßen Kunststoffrohr zur Führung eines Fluids vor, dass die Rohraußenfläche zu ihrer Profilierung Oberflächeneinprägungen aufweist.

Dabei sind die Oberflächeneinprägungen regelmäßig so gestaltet, dass ihre Eindringtiefe bzw. Eindrücktiefe weniger als 0,3 mm beträgt. Meistens wird sogar mit Eindringtiefen von weniger als 0,25 mm und vorzugsweise sogar mit solchen von weniger als 0,2 mm gearbeitet. Hierbei geht die Erfindung von der Erkenntnis aus, dass die fraglichen Kunststoffrohre üblicherweise aus einem thermoplastischen Kunststoff als Kunststoffmaterial hergestellt werden und hier insbesondere Polyethylen (PE) zum Einsatz kommt Der letztgenannte Werkstoff PE ist jedoch empfindlich hinsichtlich etwaiger Risse an der Rohraußenfläche, die sich fortpflanzen können. Im Übrigen neigt insbesondere Polyethylen dazu, dass die Rohraußenfläche bei der Herstellung durch vorzugsweise Extrusion verschmieren kann. Das heißt, Rippen, wie sie in der einleitend angegebenen DE 1 808 271 vorgesehen sind, lassen sich als Profilierung in der dargestellten Form auf ein Kunststoffrohr aus Polyethylen oder einen vergleichbaren thermoplastischen Kunststoff praktisch nicht aufbringen, bzw. dies ist mit unverhältnismäßig hohen Herstellungskosten verbunden.

Aus diesem Grund greift die Erfindung auf die beschriebenen Oberflächeneinprägungen äußerst geringer Eindringtiefe von weniger als 0,3 mm zurück, die nicht nur das beschriebene Verschmieren bei Polyethylen an der Oberfläche im Zuge des Herstellungsvorganges verhindern, sondern insbesondere dem Problem der sogenannten Rissfortpflanzung Rechnung tragen. Denn die Eindringtiefe der Oberflächeneinprägung bzw. die Eindrücktiefe ist im Ergebnis so bemessen, dass Risse praktisch nicht entstehen können und auch die gefürchtete Rissfortpflanzung nicht stattfindet. Denn umfangreiche Untersuchungen haben ergeben, dass die vorerwähnten Eindringtiefen bzw. Eindrücktiefen unkritisch sind. Das wird durch DIN-Vorschriften bestätigt, die bei PE-Kunststoffrohren eine kleinformatige Identifikationsprägung mit den beschriebenen Eindringtiefen bzw. Eindrücktiefen erlauben.

Im Rahmen der Erfindung hat sich nun herausgestellt, dass die fraglichen Oberflächeneinprägungen unter Berücksichtigung der genannten Eindringtiefen bzw. Eindrücktiefen auch vollflächig über die gesamte Rohraußenfläche aufgebracht werden können, ohne dass Rissprobleme auftreten oder zu befürchten sind. Tatsächlich empfiehlt die Erfindung in diesem Zusammenhang, die fraglichen Oberflächeneinprägungen gleichmäßig über die Rohraußenfläche verteilt anzuordnen. Außerdem hat es sich in diesem Zusammenhang als günstig erwiesen, wenn die Oberfischeneinprägungen mit Versatz zueinander in Längsrichtung des Kunststoffrohres angeordnet sind.

Um eine besonders einfache und kostengünstige Herstellung zu erreichen, sind die Oberflächeneinprägungen in der Regel als Oberflächeneinprägungspunkte ausgebildet. Die Oberflächeneinprägungspunkte bzw. allgemein die Oberflächeneinprägungen können vorteilhaft mittels eines Prägestempels in die Rohraußenfläche eingebracht werden. Bei der Produktion geht man üblicherweise so vor, dass der Prägestempel rotiert und zwar in Anlage an das Kunststoffrohr und meistens gegenläufig hierzu. Selbstverständlich sind natürlich auch andere Vorgehensweise denkbar und werden vom Erfindungsgedanken umfasst.

Wie bereits ausgeführt, sind die Oberflächeneinprägungen regelmäßig als Oberflächeneinprägungspunkte ausgebildet, das heißt, dass die Oberflächeneinprägungen nur punktuell auf der Rohraußenfläche vorgesehen sind und beispielsweise keine in Rohrlängsrichtung durchgängigen Oberflächeneinprägungen im Rahmen der Erfindung verfolgt werden. Dies deshalb nicht, um der beschriebenen Rissproblematik Genüge zu tun. Dabei können den Oberflächeneinprägungen jeweils Oberflächenauswölbungen zugeordnet sein. Diese Oberflächenauswölbungen stellen sich als Folge der Materialverdrängung beim Prägevorgang gleichsam zwangsläufig ein. Dabei sind die Oberflächenauswölbungen nicht sehr ausgeprägt, sondern verfügen über eine Wölbungshöhe von weniger als 0,3 mm, insbesondere liegt diese Wölbungshöhe sogar bei unter 0,1 mm.

Die Oberflächeneinprägungen sind in Aufsicht bevorzugt kreisförmig und/oder rechteckförmig und/oder rautenförmig und/oder ellipsenförmig und/oder quadratisch ausgebildet. Selbstverständlich sind auch Kombinationen sowie andere geometrische Formen denkbar und werden umfasst. Um die beschriebene Rissfortpflanzung möglichst vollständig zu unterdrücken bzw. dieser Rechnung zu tragen, empfiehlt es sich insbesondere, auf kreisförmige Oberflächeneinprägungen zurückzugreifen, die im Material keine Kerben oder Ecken erzeugen. Das gleiche gilt bei ellipsenförmigen Oberflächeneinprägungen. Aufgrund der geringen Eindringtiefe bzw. Eindrücktiefe sind aber auch die anderen geometrischen Gestaltungen für die Oberflächeneinprägungen denkbar und lassen sich problemlos realisieren.

Gegenstand der Erfindung ist auch die Verwendung eines oder mehrerer der zuvor beschriebenen Kunststoffrohre zur Realisierung eines Wärmetauschers für insbesondere geothermische Energieerzeugung. Hierin sind die wesentlichen Vorteile zu sehen.

Im Folgenden wird die Erfindung anhand einer lediglich ein Ausführungsbeispiel darstellenden Zeichnung näher erläutert; es zeigen

Fig.1 1    das erfindungsgemäße Kunststoffrohr in einer Anwendung zur Nutzung geothermischer Energie,

Fig. 2    das Kunststoffrohr im Querschnitt,

Fig. 3    das Kunststoffrohr im Längsschnitt schematisch und

Fig. 4    die Rohraußenfläche des Kunststoffrohres.

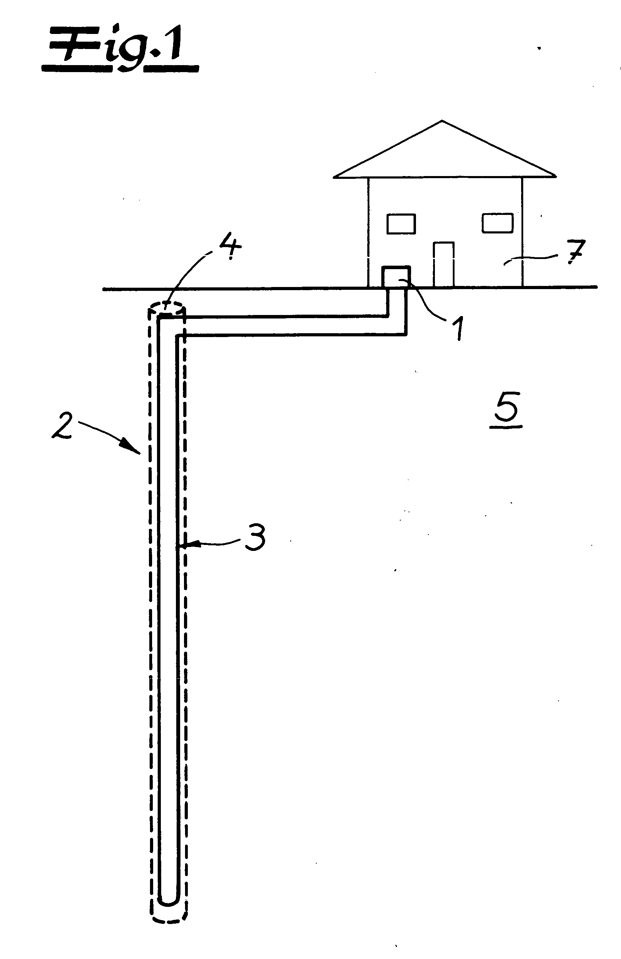

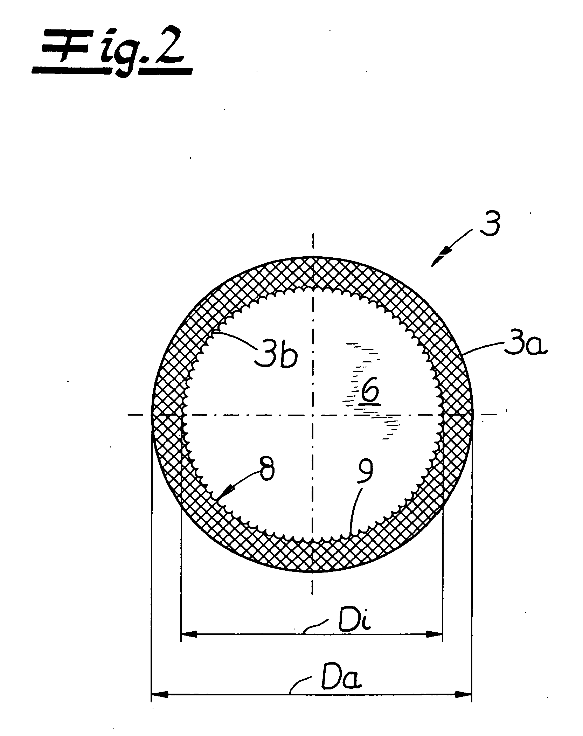

In der Fig. 1 ist eine geothermische Energieerzeugungseinrichtung dargestellt. Diese weist eine Wärmepumpe 1 und einen Wärmetauscher 2 auf, bei dem es sich um ein Kunststoffrohr 3 oder ein System aus Kunststoffrohren 3 handelt, wie sie in den Fig. 2 bis 4 im Detail dargestellt sind.

Die Fig. 1 zeigt die Nutzung geothermischer Energie mit Hilfe einer Erdwärmesonde, bei welcher das fragliche Kunststoffrohr 3 bzw. die mehreren Kunststoffrohre 3 senkrecht in eine Bohrung 4 im Erdboden 5 eingebracht worden sind. Durch die gleichsam in einem Vor- und Rücklauf verlegten Kunststoffrohre 3 wird ein Fluid 6 geführt, bei dem es sich im Rahmen des Ausführungsbeispiels und nicht einschränkend um eine Wärmeleitflüssigkeit, nämlich mit einem Gefrierschutzmittel versetztes Wasser, handelt.

Mit Hilfe der Wärmepumpe 1 wird das vom Erdboden 5 auf Temperaturen von ca. 8 bis 12 °C erwärmte Fluid 6 auf höhere Temperaturen gebracht, um ein in der Fig. 1 lediglich angedeutetes Gebäude 7 zu beheizen. Das ist grundsätzlich aus der Praxis bekannt.

Für die Erfindung von besonderer Bedeutung sind nun die speziellen Kunststoffrohre 3, bei denen es sich vorliegend um Wärmeleit-Kunststoffrohre handelt und welche in den Fig. 2 bis 4 im Detail dargestellt sind. Denn diese Kunststoffrohre 3 eignen sich besonders für die Nutzung geothermischer Energie. Dazu verfügt das jeweilige Kunststoffrohr 3 über eine zylindrische Rohraußenfläche 3a und eine zylindrische Rohrinnenfläche 3b geringerer Größe. Das lässt sich auf die unterschiedlichen Durchmesser $D_a$ und $D_i$ für den Außendurchmesser und den Innendurchmesser des jeweiligen Kunststoffrohres 3 zurückführen. Die Rohraußenfläche 3a ist im Wesentlichen als glatte Zylinderinnenoberfläche ausgebildet. Dagegen erfährt die größtenteils als Zylinderinnenoberfläche ausgestaltete Rohrinnenfläche 3b eine Modifikation, wie nachfolgend noch näher erläutert wird.

Denn um die unterschiedliche Größe von einerseits der Rohraußenfläche 3a und andererseits der Rohrinnenfläche 3b auszugleichen, schlägt die Erfindung vor, dass die Rohrinnenfläche 3b mit wenigstens einem Flächenvergrößerungsmittel 8 ausgerüstet ist. Dieses Flächenvergrößerungsmittel 8 sorgt im Kern dafür, dass der Größenunterschied zwischen der Rohraußenfläche 3a und der Rohrinnenfläche 3b mehr oder minder ausgeglichen wird. Tatsächlich stellt das Flächenvergrößerungsmittel 8 im Rahmen des Beispiels sicher, dass die Rohrinnenfläche 3b um ca. 20% gegenüber der Situation vergrößert ist, bei welcher kein Flächenvergrößerungsmittel 8 realisiert ist und folglich die Rohrinnenfläche 3b als glatte Zylinderinnenoberfläche mit kreisförmigem Querschnitt vorliegt. Bei dieser Betrachtung wird unterstellt, dass die Rohraußenfläche 3a als glatte Zylinderaußenoberfläche ausgeführt ist.

Aus dem Verhältnis

$$D_a / D_i$$

lässt sich ableiten, um wie viel Prozent die Rohraußenfläche 3a gegenüber der Rohrinnenfläche 3b größer ist und folglich das Flächenvergrößerungsmittel 8 entsprechend bemessen.

Man erkennt, dass das Flächenvergrößerungsmittel 8 einstückig mit dem Kunststoffrohr 3 ausgebildet ist, wobei Flächenvergrößerungsmittel 8 und Kunststoffrohr 3 in einem gemeinsamen Herstellungsprozess produziert werden, und zwar so, wie dies in der einleitend bereits angegebenen DE 40 31 783 A1 beschrieben wird. Als gemeinsames Kunststoffmaterial für das Flächenvergrößerungsmittel 8 und das Kunststoffrohr 3 empfiehlt die Erfindung einen thermoplastischen Kunststoff, insbesondere Polyethylen PE.

Im Detail ist das Flächenvergrößerungsmittel 8 als mehrere über den Innenumfang des Kunststoffrohres 3 bzw. dessen Rohrinnenfläche 3b verteilt angeordnete Innenlängsrippen 9 ausgebildet. Man erkennt anhand der Fig. 2, dass die Innenlängsrippen 9 im Querschnitt zackenförmig mit abgerundeten Dreieckszacken ausgebildet sind, was selbstverständlich keine zwingende Bedingung oder Einschränkung darstellt.

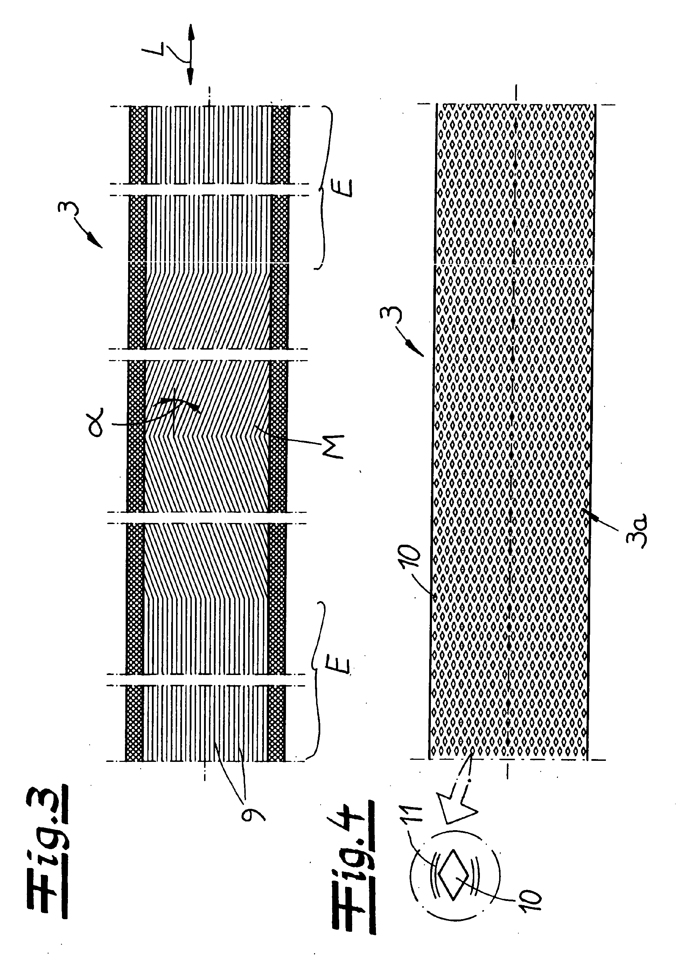

Die Innenlängsrippen 9 verlaufen ausweislich der Fig. 3 in Längsrichtung L des Kunststoffrohres 3, und zwar überwiegend nicht parallel zu dieser Längsrichtung L, sondern mit gegebenenfalls wechselnder Ausrichtung bzw. unter einem Schrägwinkel $\alpha$ gegenüber dieser Längsrichtung L. Der Schrägwinkel $\alpha$ liegt im Bereich von ca. 1° ° bis 60°, vorzugsweise zwischen 10° und 30°, im Allgemeinen bei in etwa 20°. Außerdem macht die Fig. 3 deutlich, dass beispielsweise im Bereich einer Mitte M des Kunststoffrohres 3 in Längsrichtung L die Innenlängsrippen 9 einer Richtungsumkehr unterworfen sind und in Endbereichen E des Kunststoffrohres 3 jeweils parallel zur Längsrichtung L angeordnet sind. Das ist selbstverständlich nicht zwingend und nur als Option anzusehen.

Jedenfalls sorgt die Schrägstellung der Innenlängsrippen 9 im Vergleich zur Längsrichtung L des Kunststoffrohres 3 und folglich auch der Fließrichtung des Fluids 6 dafür, dass in das Fluid 6 über die Innenlängsrippen 9 gezielt Turbulenzen eingetragen werden. Diese Turbulenzen führen dazu, dass das Fluid 6 über den gesamten Rohrinnenquerschnitt gesehen eine gleichmäßige Temperaturverteilung aufweist und folglich die Wärmeübertragung vom Erdboden 5 auf das Fluid 6 unter optimalen Bedingungen stattfindet.

Anhand der Fig. 4 erkennt man schließlich, dass die Rohraußenfläche 3a des Kunststoffrohres 3 mit Oberflächeneinprägungen 10 ausgerüstet ist, die rautenförmig, kreisförmig, rechteckig, quadratisch usw. gestaltet sein können. Die Oberflächeneinprägungen 10 erstrecken sich in der Rohraußenfläche 3a lediglich über eine Tiefe von weniger als 0,2 mm, um eine etwaige Rissbildung in der Rohraußenfläche 3a und/oder eine Rissfortpflanzung zu vermeiden. Durch die Oberflächeneinprägungen 10 verfügt die Rohraußenfläche 3a über eine gewünschte Rauigkeit, welche den Einbau der Kunststoffrohre 3 in den Erdboden 5 und ihre dortige Abdichtung erleichtert. Denn die Bohrung 4 im Erdboden 5 mit den darin eingebrachten Kunststoffrohren 3 wird in der Regel an der Erdoberfläche durch ein aushärtendes Verpressmaterial abgedichtet, welches zugleich für die Verankerung der Kunststoffrohre 3 in der Bohrung 4 sorgt. Damit nun dieses Verpressmaterial einwandfrei an der Rohraußenfläche 3a haftet bzw. mit dieser überhaupt eine Verbindung eingeht, sind die Oberflächeneinprägungen 10 vorgesehen.

Man erkennt, dass die Oberflächeneinprägungen 10 bei dem Kunststoffrohr 3 gleichmäßig über die Rohraußenfläche 3a verteilt angeordnet sind. Tatsächlich handelt es sich bei diesen Oberflächeneinprägungen 10 um Oberflächeneinprägungspunkte, die in Aufsicht im Rahmen des Ausführungsbeispiels rautenförmig gestaltet sind. Selbstverständlich sind auch kreisförmige, elliptische, rechteckförmige, quadratische oder andere geometrische Formen für die Oberflächeneinprägungen 10 bzw. Oberflächeneinprägungspunkte denkbar und werden von der Erfindung umfasst.

Die Oberflächeneinprägungen 10 verfügen über eine Eindringtiefe bzw. Eindrücktiefe von weniger als 0,3 mm, insbesondere eine solche von weniger als 0,25 mm und ganz besonders bevorzugt um eine Eindrücktiefe von weniger als 0,2 mm. Auf diese Weise wird gewährleistet, dass sich weder Risse an der Rohraußenfläche 3a bilden, noch es zu der bereits beschriebenen Rissfortpflanzung kommt oder kommen kann. Hierzu trägt auch der Umstand bei, dass die Oberflächeneinprägungen 10 mit Versatz zueinander in Längsrichtung L des Kunststoffrohres 3 angeordnet sind.

Den Oberflächeneinprägungen 10 sind in der vergrößerten Darstellung nach Fig. 4 jeweils Oberflächenauswölbungen 11 zugeordnet, die sich durch die Materialverdrängung beim Prägevorgang erklären. Die Oberflächenauswölbungen 11 können jeweils beidseitig der Oberflächeneinprägungen 10 oder auch nur einseitig hiervon angeordnet sein. Die Oberftachenauswöibungen 11 verfügen über eine Wölbungshöhe von zumeist weniger als 0,2 mm. Dadurch wird eine insgesamt wellige Oberfläche an der Rohraußenfläche 3a zur Verfügung gestellt, die über eine Welligkeit von ca. 0,4 mm verfügt, wenn man die maximale Wölbungshöhe von ca. 0,2 mm mit der Eindrücktiefe bzw. Eindringtiefe von ca. 0,2 mm kombiniert. - Bei den zuvor erläuterten Überlegungen hinsichtlich des Flächenvergrößerungsmittels 8 ist unterstellt worden, dass die Rohraußenfläche 3a im Wesentlichen glatt ausgebildet ist, was in Anbetracht der geringen Welligkeit der Rohraußenfläche 3a eine zulässige Annahme darstellt.

Die Oberflächeneinprägungen 10 werden in der Regel mittels eines gegenläufig zum Kunststoffrohr 3 rotierenden und nicht ausdrücklich dargestellten Prägestempels in die Rohraußenfläche 3a eingebracht. Dieser Prägestempel mag sich ausgangsseitig bzw. außerhalb des verwendeten Extruderwerkzeuges befinden. Dadurch verfügt das extrudierte Kunststoffrohr 3 über eine Temperatur, welche ein Verschmieren des PE an der Rohraußenfläche 3a beim Prägen verhindert.

**Patentansprüche**

1.  Kunststoffrohr (3) zur Führung eines Fluids (6), insbesondere Wärmeleit-Kunststoffrohr, mit einer profilierten Rohraußenfläche (3a) und einer Rohrinnenfläche (3b), **dadurch gekennzeichnet, dass** die Rohraußenfläche (3a) zu ihrer Profilierung Oberflächeneinprägungen (10) aufweist.

2.  Kunststoffrohr (3) nach Anspruch 1, **dadurch gekennzeichnet, dass** die Oberflächeneinprägungen (10) eine Eindrücktiefe von weniger als 0,3 mm, insbesondere weniger als 0,25 mm und vorzugsweise eine solche von weniger als 0,2 mm aufweisen.

3.  Kunststoffrohr (3) nach Anspruch 1 oder 2, **dadurch gekennzeichnet, dass** die Oberflächeneinprägungen (10) als Oberflächeneinprägungspunkte ausgebildet sind.

4.  Kunststoffrohr (3) nach einem der Ansprüche 1 bis 3, **dadurch gekennzeichnet, dass** die Oberflächeneinprägungen (10) gleichmäßig über die Rohraußenfläche (3a) verteilt angeordnet sind.

5.  Kunststoffrohr (3) nach einem der Ansprüche 1 bis 4, **dadurch gekennzeichnet, dass** die Oberflächeneinprägungen (10) mit Versatz zueinander in Längsrichtung (L) des Kunststoffrohres (3) angeordnet sind.

6.  Kunststoffrohr (3) nach einem der Ansprüche 1 bis 5, **dadurch gekennzeichnet, dass** den Oberflächeneinprägungen (10) jeweils Oberflächenauswölbungen (11) als Folge der Materialverdrängung beim Prägevorgang zugeordnet sind.

7.  Kunststoffrohr (3) nach einem der Ansprüche 1 bis 6, **dadurch gekennzeichnet, dass** die Oberflächeneinprägungen (10) in Aufsicht kreisförmig und/oder rechteckförmig und/oder rautenförmig und/oder ellipsenförmig und/oder quadratisch oder dergleichen ausgeführt sind.

8.  Kunststoffrohr (3) nach einem der Ansprüche 1 bis 7, **dadurch gekennzeichnet, dass** als Kunststoffmaterial ein thermoplastischer Kunststoff, insbesondere Polyethylen (PE), eingesetzt wird.

9.  Kunststoffrohr (3) nach einem der Ansprüche 1 bis 8, **dadurch gekennzeichnet, dass** die Oberflächeneinprägungen (10) mittels eines gegenläufig zum Kunststoffrohr (3) rotierenden Prägestempels in die Rohraußenfläche (3a) eingebracht werden.

10. Verwendung eines Kunststoffrohres (3) nach einem der Ansprüche 1 bis 9 zur Realisierung eines Wärmetauschers (2) für insbesondere geothermische Energieerzeugung.

# Fig.1

# Fig. 2

## Fig.3

## Fig.4

EP 1 900 988 A1

**Europäisches Patentamt**

**EUROPÄISCHER RECHERCHENBERICHT**

Nummer der Anmeldung

EP 06 01 9131

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 142 482 A2 (UPONOR AB [SE]) 22. Mai 1985 (1985-05-22) | 1,3-10 | INV. F16L9/00 |
| Y | * Seite 4 - Seite 17; Abbildungen 1,7-12 * | 2 | F16L9/12 |
| X | US 3 998 579 A1 (NORDSTROM ERIK GUSTAV WENDEL) 21. Dezember 1976 (1976-12-21) * Spalte 2 - Spalte 7; Abbildungen 1,14,15 * | 1,3-9 | ADD. B29C59/04 |
| X,D | DE 18 08 271 A1 (NISHIKAWA YUKIO) 2. April 1970 (1970-04-02) * Abbildung 15 * | 1,4,6-8 | |
| X | GB 1 402 395 A (DURO PENTA HOLDINGS PTY LTD) 6. August 1975 (1975-08-06) * das ganze Dokument * | 1,4-8 | |
| X | US 2003/178846 A1 (EZURA TAKUMI [JP]) 25. September 2003 (2003-09-25) * Absatz [0051] - Absatz [0065]; Abbildungen 14,20 * | 1,3-5,7 | |
| Y | EP 0 361 639 A2 (TOA NENRYO KOGYO KK [JP] TONEN CORP [JP]) 4. April 1990 (1990-04-04) * Seite 4, Zeile 41 - Zeile 50; Abbildungen 2,3 * | 2 | **RECHERCHIERTE SACHGEBIETE (IPC)** F16L |
| A | EP 1 403 025 A (KERTSCHER EBERHARD [CH]) 31. März 2004 (2004-03-31) * Absatz [0032]; Abbildung 3 * | 9 | |

Der vorliegende Recherchenbericht wurde für alle Patentansprüche erstellt

| Recherchenort | Abschlußdatum der Recherche | Prüfer |
|---|---|---|
| Den Haag | 13. März 2007 | Popescu, Alexandru |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 9131

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2007

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0142482 | A2 | 22-05-1985 | AU | 3670184 | A | 03-06-1985 |
| | | | CA | 1225209 | A1 | 11-08-1987 |
| | | | DE | 3483906 | D1 | 14-02-1991 |
| | | | NO | 852815 | A | 12-07-1985 |
| | | | SE | 449456 | B | 04-05-1987 |
| | | | SE | 8306284 | A | 16-05-1985 |
| | | | WO | 8502144 | A1 | 23-05-1985 |
| | | | US | 4710337 | A | 01-12-1987 |
| US 3998579 | A1 | | KEINE | | | |
| DE 1808271 | A1 | 02-04-1970 | DE | 6806402 | U | 14-09-1972 |
| | | | FR | 2017685 | A5 | 22-05-1970 |
| GB 1402395 | A | 06-08-1975 | AU | 463638 | B2 | 31-07-1975 |
| | | | AU | 5491473 | A | 31-10-1974 |
| | | | CA | 1011521 | A1 | 07-06-1977 |
| | | | CH | 551272 | A | 15-07-1974 |
| | | | DE | 2321398 | A1 | 31-10-1973 |
| | | | FI | 58276 | B | 30-09-1980 |
| | | | FR | 2182214 | A1 | 07-12-1973 |
| | | | NL | 7305983 | A | 30-10-1973 |
| | | | ZA | 7202898 | A | 27-06-1973 |
| US 2003178846 | A1 | 25-09-2003 | DE | 10215607 | A1 | 09-10-2003 |
| | | | JP | 2003278990 | A | 02-10-2003 |
| EP 0361639 | A2 | 04-04-1990 | DE | 68924317 | D1 | 26-10-1995 |
| | | | DE | 68924317 | T2 | 02-05-1996 |
| | | | JP | 2078533 | A | 19-03-1990 |
| | | | JP | 2805327 | B2 | 30-09-1998 |
| | | | NO | 892624 | A | 27-12-1989 |
| EP 1403025 | A | 31-03-2004 | AU | 2003266089 | A1 | 19-04-2004 |
| | | | WO | 2004028778 | A1 | 08-04-2004 |
| | | | US | 2006162867 | A1 | 27-07-2006 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1808271

- DE 4031783 A1